(19) Europäisches Patentamt

European Patent Office

Office européen des brevets

(11) **EP 4 703 718 A1**

(12) **EUROPEAN PATENT APPLICATION**

(43) Date of publication:
**04.03.2026 Bulletin 2026/10**

(21) Application number: **24198257.8**

(22) Date of filing: **03.09.2024**

(51) International Patent Classification (IPC):
***G01N 27/409*** *(2006.01)*

(52) Cooperative Patent Classification (CPC):
**G01N 27/409**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **McGowan Senor Labs Limited
Oxford OX2 8JL (GB)**

(72) Inventor: **Smith, Peter
c/o McGowan Senor Labs Limited  29 Kirk Close
Oxford OX2 8JL (GB)**

(74) Representative: **Mathys & Squire
The Shard
32 London Bridge Street
London SE1 9SG (GB)**

(54) **A SOLID-STATE POTENTIOMETRIC OXYGEN SENSOR CHIP**

(57)    A potentiometric gas sensor (10) comprises a planar solid-state electrolytic chip (12) having a sensing electrode (20), a reference electrode (22), and a heater (28) provided thereon. The heater, the sensing electrode and the reference electrode are provided on the same surface of the chip. The gas sensor may be in the form of a microchip. The gas sensor is particularly suitable for detecting a gas, such as oxygen, in an environment such as in an internal combustion engine, a factory or a scientific laboratory.

## Fig. 1

## Description

### Field of the invention

The present invention relates to a gas sensor, and in particular to a gas sensor for detecting oxygen.

### Background of the invention

Gas and particle sensors are used for monitoring air quality and controlled atmospheres in a wide range of industries. As reported in Gas and Particle Sensors - Technology and Market Trends 2021 (published by Yole Intelligence), oxygen sensors account for 55% of all sensor sales, with zirconia-based electrochemical sensors being the dominant technology.

The standard sensor is comprised of a zirconia-based electrolyte element in the form of a disk, tile strip or tube which is coated on opposite sides by electrodes. The opposite sides are exposed to two different atmospheres: one being a measuring atmosphere and the second being a reference atmosphere whose composition is known, and is generally air. Electrodes can be either a metal, or a metal oxide and require electron conductivity. To create separation of the two atmospheres, the ceramic electrolyte has traditionally been fabricated in the form of a closed end tube or thimble with the inner surface exposed to the reference air atmosphere. However, other shapes are possible and the most common is a flat rectangular 'laminated' design, assembled by stacking and bonding together multiple individual pre-formed component strips of different shapes and composition. An internal cavity open to the reference atmosphere or a fully enclosed reference atmosphere are features of the laminate design. These types of sensors are known as potentiometric (or Nernstian) sensors. A general description of the technology, and the scientific principles underlying the Nernstian detection mechanism is described in Zhuiykov: Electrochemistry of zirconia gas sensors (2007, 1st edition, published by CRC Press: https://doi.org/10.1201/9781420047622).

Another, very different, design variant is based on a vertical multi-layered planar construction with an inner chamber covered by membrane typically 5-10mm in thickness. The ingress of oxygen into the sensor is controlled by a very fine through-hole (around 50 to 100 microns in diameter) which traverses the membrane. This type of sensor is referred to amperometric or current-limiting as the ingressing oxygen generates a current on reaction with the sensing electrode and, as the rate of ingressing oxygen is controlled by the external oxygen partial pressure and the dimensions of the through-hole, provides a direct link between the current generated and external oxygen. The amperometric variant is complimentary to the potentiometric variant, offering a more restricted detection range but more accurate measurements. However, blockage of the narrow through-hole and sensitivity to sudden pressure changes can be problematic in some applications. It also competes in the market place with a liquid-electrolyte based alternative which does not require heating and is therefore portable, but is susceptible to electrolyte leaks and has shorter lifetimes.

There are a number of ceramic electrolytes that are currently used in potentiometric sensors, e.g. zirconia doped with various oxides (yttrium, calcium scandium, gadolinium oxides), beta-alumina and cerium oxide, with yttria-doped zirconia (YSZ) being the cheapest and by far the most widely used.

The overriding market for potentiometric sensors is the fossil-fuelled automotive industry where the sensors are used as part of a system which controls the air-fuel mixture in the combustion engine, and to monitor the resultant exhaust emissions. The sensors operate in this environment at high temperatures of around 500 to 900 °C, and are either heated by the external atmosphere or have an embedded heater.

The sensor design is generally robust and failure is more likely to occur in the supporting electronics than in the sensor itself. When it does happen in the sensor, it is likely due to silicone poisoning which is caused by the thermal decomposition of siloxane that occurs in a high temperature sensing environment over time. Such poisoning can undesirably reduce the lifetime of a sensor.

Although the sensors themselves are robust, they are not always accurate. Common causes of measurement inaccuracy include: temperature fluctuations in the test environment; temperature differences between the electrodes and the heater which require an offset; and even temperature differences between the sensing and reference electrodes. These arise due to features of the sensor design. Another source of error is the presence of combustible gases such as hydrocarbons, particularly pronounced at very low concentrations of oxygen, i.e. ppm or ppb levels. Such gases consume oxygen on the surface of the sensing electrode, thereby giving a false low reading.

Although sensor design has evolved in response to the needs of the automotive market, many features have remained largely unchanged, e.g. cost, power consumption, size and interference from residual levels of combustible gas. This has greatly limited the suitability of the sensors for other applications, for instance in industries in which the sensors are used at more moderate temperatures such as around room temperature. Examples of these markets include medical, food processing, waste management, nitrogen generation, and semiconductor manufacturing processes. Energy and power efficiency can be critical for these applications, as well sensors being less obtrusive i.e. with a small footprint, having fewer component parts and being low cost. Technologies favoured by some of these industries include galvanic liquid electrolyte sensors, thermo-paramagnetic and tunable laser diode gas sensors. However, each of these sensor technologies has its own distinct merits and limitations.

The YSZ technology is unique in operating in hot humid dirty conditions, has no consumable parts and has a detection span from ppb to 100% $O_2$. However, the worldwide transition away from the traditional fossil-fuel related markets requires changes to the design of the YSZ sensor to widen its applicability to these other markets. Surprisingly the design has withstood the radical changes seen in recent times with other sensor technologies in making them small, lightweight, compact, energy efficient with fast boot-up times and flexible to design changes. The following documents describe efforts that have been made to made to shrink or simplify the design:

US 5,827,415 A

Shuk: Oxygen Gas Sensing Technologies Application: A Comprehensive Review (2017, DOI: 10.1007/978-3-319-47322-2_5)

WO 2013/160271 A1

Hu et al: Improved Internal Reference Oxygen Sensors with Composite Ceramic Electrodes (2012, J. Electrochem. Soc., 159(10), B811-B817, DOI: 10.1149/2.021210jes)

Kanekoa et al: Performance of a miniature zirconia oxygen sensor with a Pd-PdO internal reference (2005, Sensors and Actuators B: Chemical, 108 (1-2), 331-334)

JP 2004-117099

Dunst et al: Potentiometric oxygen sensor with solid state reference electrode (2014, Metrol. Meas. Syst., Vol. XXI(2), 205-216)

Radhakrishnan et al: Design, fabrication and characterization of a miniaturized series-connected potentiometric oxygen sensor (2005, Sensors and Actuators B 105, 312-321)

Some of the designs disclosed in these documents centre on a variety of planar formats using an enclosed reference in place of the air, multiple layer assemblies with integrated heater, internal chambers for the air reference, via holes to ensure electrical leads are on the same side, or even shifting the design to a silicon substrate and utilising microfabrication techniques patterning and deposition techniques to miniaturise the sensor. The proposed designs have not translated into commercial products, with technical reasons such as oxygen leakage in the reference electrode (e.g. due to cracks in the seal), warping, delamination and weak signals being mentioned in some cases. At least in part due to these reasons, zirconia-based potentiometric gas sensors have remained firmly rooted in the large bulky energy-intensive tubular or laminate format. The transformation of the potentiometric sensor from a large analogue design to a tiny digital-age form factor has remained on hold.

Thus, there remains a need for a low-power, compact, lightweight ceramic- or silicon-based potentiometric sensor.

## Summary of the invention

Instead of following a predictable pathway of iterative steps changes centred on the silicon fabrication methodologies (via holes, MEMS, etc), the present invention provides a simple but effective sensor that may be readily manufactured.

In a first aspect, the present invention provides a potentiometric gas sensor comprising a planar electrolytic chip having a sensing electrode, a reference electrode, and a heater provided thereon. The heater, the sensing electrode and the reference electrode are provided on the same surface of the chip. The gas sensor is a miniaturised gas sensor in which the planar surface of the chip on which the heater, the sensing electrode and the reference electrode are provided has a surface area of from 0.1 to 5 mm$^2$.

As a result of its simple form, the potentiometric gas sensor of the present invention may be configured to operate intermittently at a holding temperature, e.g. of up to 300 °C, and a sensing temperature which is higher than the holding temperature, e.g. a sensing temperature of from 500 to 650 °C. Since the holding temperature is lower than the sensing temperature, both the rate at which the sensor may get poisoned, for instance as a result of the thermal decomposition of siloxane gases, and the overall power consumption of the sensor are reduced. This result is not possible with multilayered or multi-material bulky sensor devices of the prior art since thermal cycling leads to stress and mechanical faults (e.g.

fracture) between different components, with particularly acute problems observed in sensors comprising materials of different thermomechanical properties such as YSZ electrolytes and alumina passivation layers. Moreover, their large thermal mass mitigates against rapid heating and cooling in a thermal cycling protocol of, *e.g,* a 1 to 5 minute residence time at the lower holding temperature followed by 1 to 5 minute hold at the upper sensing temperature.

In a further aspect, a potentiometric gas sensor comprises a planar electrolytic chip having a sensing electrode, a sealed reference electrode, and a heater provided on the same planar surface of the chip. An insulation layer sits between the chip and the heater. The reference electrode is sealed with a sealing layer having a lower flow point than the insulation layer that sits between the chip and the heater.

These sensors may be seen as 'glazed' ceramic parts which can be prepared by using a first heat treatment step for forming a continuous insulation layer on the surface of the chip, and a second heat treatment step for sealing the reference electrode with the sealing layer. The second heat treatment step is preferably carried out at a lower temperature than the first heat treatment step, e.g. at a temperature above the flow point of the sealing layer, but below the flow point of the one or more insulation layers. This allows the reference electrode to be fully sealed at temperatures which minimise disruption of the coated insulated substrate.

Also provided is a gas sensing device which comprises a gas sensor of the present invention housed in a casing. The casing may comprise an aperture which is open to the external environment and a carbon filter covering the aperture.

Further provided is a method of detecting a gas, such as oxygen, in an environment, said method comprising using a gas sensor of the present invention to measure the amount of the gas in the environment, as well as the use of a gas sensor of the present invention for detecting a gas, such as oxygen, in an environment.

As a result of its simple form, a gas sensor of the present invention may be readily manufactured at relatively low cost. Furthermore, the one-sided nature of the sensor allows for simple manufacturing while also facilitating flexibility in the sensor design, with scope for additional features such as a filter coating on the sensing electrode, additional or alternative sensing electrodes of different metallurgy, or additional or alternative reference electrodes of different compositions. Thus, the present invention also provides a method of preparing a gas sensor of the present invention. The method comprises: depositing a sensing electrode and a reference electrode onto a surface of a planar electrolytic chip, and further providing a heater on the surface of the chip. The heater, the sensing electrode and the reference electrode are provided on the same surface of the chip.

## Figures

Fig. 1 is a schematic depicting an exploded view of a gas sensor (10) of the present invention having a sensing electrode (20), a reference electrode (22) and an embedded heater (28) on the same side of the electrolytic chip.

Fig. 2 is a schematic depicting an exploded view of a gas sensor (10) of the present invention in which a filter coating (30) is present on the sensing electrode (20).

Fig. 3 is a schematic depicting an exploded view of a gas sensor (10) of the present invention in which two sensing electrodes (20a, 20b) are present, one of which has a filter coating (30) deposited thereon.

Fig. 4 is a schematic depicting an exploded view of a gas sensor (10) of the present invention in which two reference electrodes (22a, 22b) are present, each of which is provided with a different reference couple (24a, 24b).

Fig. 5 is a top-down view of the gas sensor (10) depicted in Fig. 1.

Fig. 6a is a cross-sectional view of the gas sensor (10) depicted in Fig. 1 from side A. Fig. 6b is a cross-sectional view of the gas sensor from side B. Sides A and B are marked in Fig. 5.

Figs. 7, 8, and 9 are perspective, plan, and side views respectively of a gas sensor chip assembly (1) of the present invention which is connected via wires (34) to pins (32) in a casing (30).

Fig. 10 is a schematic of a manual production line for assembling (a) a standard 2-sided chip sensor representative of the prior art and (b) a single-sided chip sensor of the present invention.

Fig. 11 is a plot of power consumption vs operating temperature of ceramic chip.

## Detailed description of the invention

*Overall sensor*

The present invention relates to potentiometric gas sensors. Potentiometric sensors determine the concentration of a gas analyte by comparing the electrical potential of a sensing electrode to that of a reference electrode.

The gas sensors of the present invention comprise a planar electrolytic chip on which a sensing electrode, a reference electrode and a heater are provided. Thus, unlike laminated prior art structures, the gas sensors of the present invention are monolithic chip structures having a single electrolytic chip substrate. The sensors of the present invention are preferably stand-alone, *i.e.* they do not comprise a supporting substrate in addition to the electrolytic chip.

The gas sensor of the present invention is a single-sided sensor. In other words, the sensing and reference electrodes and the heater are all provided on the same planar surface of the chip. It will be appreciated that the electrodes and heater may be provided directly on the surface of the chip, or indirectly via one or more intermediate layers between. The planar surface on which the electrodes and heater are provided may be referred to as the "upper" surface, *i.e.* the surface of the chip that faces the environment in which contaminant gases are being detected. It will be appreciated that the "underside" of the chip is the planar surface on which the heater and electrodes are not provided.

Any electronics or other associated apparatus is also preferably provided on the same surface of the chip. Being single-sided dispenses with the need to do a flip-chip during manufacturing, thereby eliminating an assembly step, speeding up throughput and improving yield by avoiding potential damage to the gas sensor during the flipping operation.

As will be discussed in greater detail below, the sensing and reference electrodes and the heater are all preferably planar in nature. This simple design allows the gas sensor to be readily manufactured at low cost in a miniaturised form, and represents a significant departure from the existing complex sensor structures having multiple layers of different materials and geometries, multiple heat treatment steps, and their concomitant costs and slower manufacturing times.

The gas sensor of the present invention is preferably a miniaturised gas sensor. A miniaturised sensor reduces thermal mass and therefore power consumption.

The footprint of the gas sensor will generally be determined by the surface area of the planar electrolytic chip, and the associated size of any housing or casing for the sensor.

The footprint of the gas sensor may be at least $0.1 \text{ mm}^2$, preferably at least $0.2 \text{ mm}^2$, and more preferably at least $0.25 \text{ mm}^2$. The footprint of the gas sensor may be up to $5 \text{ mm}^2$, preferably up to $4 \text{ mm}^2$, and more preferably up to $2 \text{ mm}^2$. Thus, the footprint of the gas sensor may be from $0.1$ to $5 \text{ mm}^2$, preferably from $0.2$ to $4 \text{ mm}^2$, and more preferably from $0.25$ to $2 \text{ mm}^2$.

The footprint of the gas sensor is typically in the shape of a rectangle (e.g. a square or non-square rectangle). The peripheral edge of the gas sensor will generally be the peripheral edge of the planar electrolytic chip.

The gas sensor may have an overall thickness of at least $50 \text{ } \mu\text{m}$, preferably at least $75 \text{ } \mu\text{m}$, and more preferably at least $100 \text{ } \mu\text{m}$. The gas sensor may have an overall thickness of up to $300 \text{ } \mu\text{m}$, preferably up to $275 \text{ } \mu\text{m}$, and more preferably up to $250 \text{ } \mu\text{m}$. Thus, the gas sensor may have an overall thickness of from $50$ to $300 \text{ } \mu\text{m}$, preferably from $75$ to $275 \text{ } \mu\text{m}$, and more preferably from $100$ to $250 \text{ } \mu\text{m}$. It will be appreciated that, when the sensor is providing in a housing or casing, the overall dimensions may be larger than those listed in this paragraph.

The gas sensor is typically devoid of inner chambers, cavities and via holes and multiple electrolytic layers. Its monolithic form is therefore much simpler and easier to assembly than prior art sensors.

The gas sensors of the present invention may be configured to operate at a sensing temperature, preferably of from 500 to 650 °C. In preferred embodiments, a sensor is configured to operate intermittently at a holding temperature, which is lower than the sensing temperature, and the sensing temperature. This means that the sensor repeatedly switches between a first lower temperature "holding temperature" mode and a second higher temperature "sensing temperature" mode. The sensor may be operated at holding temperature for 1 to 30 minutes. The sensor may be operated at a sensing temperature for 1 to 5 minutes. The duration for which the sensor is operated in each mode depends on the situation in which the sensor is used and may depend, e.g., on the extent to which the environment in which the sensor is used could be life threatening, desired frequency of measurements, data storage capacity in system, *etc.*

In preferred embodiments, a sensor is configured to operate intermittently at a holding temperature of below 300 °C and a sensing temperature of from 500 to 650 °C. A temperature of 300 °C is beneficial because this is below the decomposition temperature of siloxane gases.

*Sensing electrode*

The gas sensors of the present invention comprise a sensing electrode.

A sensing electrode is used to detect gas in an atmosphere. As such, a sensing electrode is open to the atmosphere in which it is used. The sensing electrode may be open to the atmosphere because it is entirely uncovered, or it can be covered by a material which is permeable to gases such as a filter coating (discussed in greater detail below). The sensing electrode is in electrical contact, and preferably direct physical contact, with the chip.

The sensing electrode is preferably porous, and more preferably has an open-cell porous structure. This facilitates a "triple phase boundary" (TPB) at which gas, electrode and electrolyte can share common points of contact. In some embodiments, the entirety of the sensing electrode is porous. In other embodiments, just an active region (i.e. non-bond pad region - discussed below in greater detail) of the sensing electrode is porous.

The sensing electrode is preferably in the form of a planar structure. The planar structure may be in the shape of a rectangle (e.g. a square or non-square rectangle) or a circle.

The sensing electrode will typically be a metallic sensing electrode. The sensing electrode may comprise and preferably is a platinum, palladium, gold or silver electrode, with platinum and gold particularly preferred.

It is generally preferred for the sensing electrode to be formed of a single material, even though the material itself may be a composition comprising multiple components. Thus, the sensing electrode is preferably formed as a single, preferably planar, structure of uniform material.

Though less preferred, in some embodiments, different regions of the sensing electrode may be made from different materials. For instance, where the sensing electrode comprises a bond pad (discussed below), the bond pad may be made of a different material from the rest of the sensing electrode. Where different regions are made from different materials, the different regions are all preferably selected from the materials mentioned above.

The sensing electrode may comprise a bond pad, i.e. a region of the sensing electrode that is not in direct physical contact with the chip. Thus, the bond pad is electrically insulated from the chip other than through non-bond pad area (i.e. the active region) of the sensing electrode. The bond pad may be electrically insulated from the chip by an insulation layer.

The insulation layer preferably sits between the chip and the bond pad. The insulation layer will typically be in direct contact with both the chip and the bond pad.

In preferred embodiments, the insulation layer covers the entire upper surface of the chip apart from the areas below the non-bond pad region (i.e. active region) of the sensing and reference electrodes. This allows the electrodes to remain in direct electrical contact with the chip.

The insulation layer may cover at least 50 %, preferably at least 65 %, and more preferably at least 80 % of the surface area of the upper surface of the chip. The insulation layer may cover up to 95 %, preferably up to 92 %, and more preferably up to 90 % of the surface area of the upper surface of the chip. Thus, the insulation layer may cover from 50 to 95 %, preferably from 65 to 92 %, and more preferably from 80 to 90 % of the surface area of the upper surface of the chip.

Suitable materials for an insulation layer include glass and are discussed in greater detail below.

In alternative if less preferred embodiments, the sensing electrode may comprise a bond pad which is in direct physical contact with the chip, provided that it the bond pad is in a densified (i.e. non-porous) form. This ensures that a TPB, as described earlier, is not formed in the bond pad area of the sensing electrode. It will be appreciated that, in these embodiments, the active region of the sensing electrode is preferably still porous (as described above in greater detail).

In embodiments in which a densified bond pad is used, an insulation layer is preferably still present on the surface of the chip to provide insulation between the heater and chip. This insulation layer is as described above, but preferably covers the entire upper surface of the chip apart from the entire area below the sensing and reference electrodes. This allows the entirety of the electrodes to remain in direct electrical contact with the chip.

A filter coating may be present on the surface of the sensing electrode. It will be appreciated that this is the surface of the sensing electrode that, in the absence of the coating, would be exposed to atmosphere. The filter coating is preferably deposited directly on the sensing electrode. It will be appreciated that the filter coating is applied to the external surface (i.e. that faces the atmospheric environment) of the electrode.

The filter coating preferably reduces the interference of contaminant gases, by "blocking" the contaminant gases from the sensing surface.

For instance, when the gas sensor is for detecting oxygen gas, contaminant gases include volatile organic compounds (VOCs) or oxygen-containing gases. The VOCs or oxygen-containing gases can react with oxygen at the sensing electrode thereby reducing the level of oxygen that is detected by the sensor compared to the level that is actually present in the atmosphere. A further advantage of a filter coating is that, in fast flowing non-equilibrium environments such as an engine, it can serve to promote the establishment of thermodynamic equilibrium of the gaseous atmosphere in the vicinity of the sensing electrode.

In preferred embodiments, the filter coating comprises a zeolite or an oxidation catalyst. In some embodiments, the filter coating may comprise a zeolite and an oxidation catalyst.

Zeolite filter coatings adsorb contaminant species from the environment around the sensing electrode. Zeolites are aluminosilicate materials, which are typically crystalline and microporous. Zeolites comprise silicon, aluminium and oxygen, and typically have the general formula $M^{n+}_{1/n}(AlO_2)^-(SiO_2)_x yH_2O$ where $M^{n+}_{1/n}$ is either a metal ion or $H^+$.

An oxidation catalyst reacts with contaminant species in the environment around the sensing electrode to reduce their impact on the sensing electrode. The oxidation catalysts used in the present invention may comprise a metal oxide; a metal oxide loaded with a precious metal such as platinum, palladium, rhodium or gold, preferably platinum or palladium; or both. For instance, the oxidation catalysts may comprise a two-phase stacked structure whereby an inner, typically thicker, layer is a metal oxide and an outer layer is a metal oxide loaded with a precious metal.

The metal oxides are preferably cation-defective and therefore oxygen-rich, *i.e.* p-type metal oxides (generally of high thermodynamic stability) such as NiO, $Co_3O_4$, $Cr_2O_3$ MnO and $La_2O_3$. The preferred two-layered structure is designed to reduce the amount of oxygen from the surrounding environment that is consumed by the catalyst, thereby minimising any unwanted impact of the catalyst on the local sensor environment.

It will be appreciated that the catalytic coating allows the gas being detected by the sensor to pass through the coating to the sensing electrode with minimal changes. Hence, the catalytic coating is described as a "filter" coating.

The filter coating will typically be porous, and most likely microporous or mesoporous. It is known in the art that microporous materials have a pore width not exceeding about 2.0 nm, while mesoporous materials have a pore width which is greater than about 2.0 nm but not exceeding about 50 nm, while microporous materials have a pore width exceeding about 50 nm (IUPAC).

The form of the coating will be dependent on the coating method deployed, such as chemical or sputter deposition or the particle-suspension deposition methods such as inkjet, droplet or screen-printing. For the latter, the characteristics of the particles such as size, shape, surface area, the particle loading in the suspension and the viscosity of the suspension will govern the compactness of the coating. The porous nature of the layer allows passage of gases such as oxygen through the coating but the pathway is designed to be tortuous so as to facilitate interaction between the catalytic / adsorbent surfaces and the contaminant gases.

In some embodiments, a layer of carbon filter, such as an activated carbon filter, may be present between the sensing electrode and the environment in which the sensor is used. Like the filter coating, this layer helps to reduce the amount of contaminant gases that come into contact with the sensing electrode. It will be appreciated that the carbon filter is a separate layer of material to the electrode, and not a "filter coating". The layer of carbon filter may be used instead of, or in combination with, a sensor coating. In some embodiments (discussed below), the carbon filter may cover an aperture in sensor casing. In other embodiments, the carbon filter may be attached directly to the sensor.

In some embodiments, the gas sensor comprises a single sensing electrode, i.e. no more than one sensing electrode. Where a single sensing electrode is used, it preferably comprises a filter coating as described above.

However, in other embodiments, the gas sensor comprises multiple, i.e. two or more, such as two or three, sensing electrodes. These embodiments demonstrate the flexibility of the sensor design.

For instance, the gas sensor may comprise two identical sensing electrodes so that one can act as a backup in case of failure of the first electrode. It will be appreciated that, for the sensing electrodes to be considered identical, they must have the same composition and structure, including the presence or absence of coatings.

However, where the gas sensor comprises multiple sensing electrodes, it is generally preferred that the sensing electrodes differ from one another. For instance, the sensing electrodes may differ from one another in composition and/or structure. Thus, the sensing electrodes may differ from one another in their reactivity towards contaminant gases. This means that, when the gas sensor is in use, the level of gas that is detected by each sensing electrode may be compared to provide information about the atmosphere surrounding the gas sensor. In other words, the multi-sensor capability allows for a composition analysis of the atmosphere, for instance by allowing the determination of both target gas levels, e.g. oxygen levels, and contaminant gases, e.g. VOC levels, in an atmosphere.

The sensing electrodes may have the same structure but differ in composition, for instance because they comprise different metallurgy. Alternatively, the sensing electrodes may have the same composition but differ in structure, for instance due to the presence of a filter coating on just one of the sensing electrodes.

The gas sensor may comprise a pair of sensing electrodes which differ only in composition, and an identical backup pair of sensing electrodes. The gas sensor may comprise a pair of sensing electrodes which differ only in structure, and an identical backup pair of sensing electrodes. The gas sensor may comprise a pair of sensing electrodes which differ only in composition, a pair of sensing electrodes which differ only in structure, and optionally backup sensing electrodes for each of the pairs of electrodes.

*Reference electrode*

In addition to a sensing electrode, the potentiometric gas sensors of the present invention comprise a sealed reference electrode.

Unlike the sensing electrode, the reference electrode is not open to the environment in which it is used, but instead comprises a hermetically sealed reference environment. Since the electrical potential that is imparted to the reference electrode from the reference environment is known, the amount of gas that is detected by the sensing electrode may be determined by the potential difference between the sensing and reference electrodes.

The gas sensor preferably comprises a reference couple which is sealed within the reference environment with the reference electrode. It is this reference couple (by virtue of a generated equilibrium oxygen partial pressure) that imparts the electrical potential to the reference electrode, rather than an air-filled chamber that is seen in the more conventional devices.

The reference couple is preferably in direct physical contact with the reference electrode. The reference couple preferably covers the portion of the reference electrode that is in contact with the chip, but not the bond pads which are open to the environment in which the sensor is used.

The reference couple may comprise a mixture of a first metal and a first metal oxide with the first metals being the same, or a mixture of a first metal oxide and a second metal oxide where the first and second metals are the same or, preferably, different. Metal oxides may comprise multiple metals such as two different metals. The reference couple provides the reference electrode with a value of $pO_2$ which is defined thermodynamically by the reaction at equilibrium between the different components of the reference couple and oxygen for a given operating temperature.

Exemplary materials for the reference couple are selected from: $Pd/PdO$, $Ni/NiO$, $Cr/Cr_2O_3$, $Ru/RuO_2$, $Co/CoO_2$, $CuO/CuO_2$, $Fe_3O_4/Fe_2O_3$, $CeO_2/ZrO_2$, and $La_{1-x}Sr_xMnO_3/YSZ$.

The reference electrode used in the present invention is sealed. This means that it is not open to the environment in which the sensor is used. The reference electrode is typically sealed with a sealing layer. The sealing layer provides gas tightness in the reference environment. Suitable materials for a sealing layer are those that may be used in the insulation layer, and include glass-based materials. In some embodiments, the reference electrode is sealed with the same insulation layer that covers the heater. However, as discussed in greater detail below, the sealing layer is preferably separate from the insulation layer that covers the heater. In these embodiments, the sealing layer preferably comprises a material with a lower flow point than the material used for any insulation layers in the sensor.

It will be appreciated that sealing layer covers the entirety of the active region of the reference electrode in order to seal the reference environment. The sealing layer preferably does not extend significantly beyond the reference environment and, as such, occupies just a small proportion of the upper surface of the sensor. The sealing layer will generally cover up to 20 %, preferably up to 15 %, and more preferably up to 10 % of the surface area of the upper surface of the chip.

Due to the small size of the sealing layer, there is generally no need to coat an additional glass layer on the underside of the chip to take account of the sealing layer, as the sealing layer would, if anything, only cause negligible curvature of the chip.

The reference electrode is in electrical contact, and preferably direct physical contact, with the chip. The reference electrode is provided on the same side of the chip as the sensing electrode. The reference electrode is preferably provided in the same plane as the sensing electrode.

As with the sensing electrode, the reference electrode and the reference couple preferably have a porous, and more preferably an open-cell porous, structure. In some embodiments, the entirety of the reference electrode is porous. In other embodiments, just an active region (i.e. non-bond pad region - discussed below in greater detail) of the reference electrode is porous.

The reference electrode is preferably in close proximity to the sensor electrode. This means that thermal gradients between the sensing and reference electrodes, which can impact the levels of gas detected, are minimised.

For instance, the space between the reference electrode and the sensing electrode on the chip surface is preferably less than 500 $\mu$m, preferably less than 300 $\mu$m, and more preferably less than 200 $\mu$m. In some embodiments, the space between the reference electrode and sensing electrode may be even smaller, for instance less than 100 $\mu$m. Where the gas sensor comprises more than one sensing electrode and/or more than one reference electrode, the space between each of the reference and sensing electrodes on the chip surface is preferably less than 500 $\mu$m, preferably less than 300 $\mu$m, and more preferably less than 200 $\mu$m or even less than 100 $\mu$m. It will be appreciated that the "space" between the electrodes represents the minimum straight-line distance between a peripheral edge of the reference electrode and a peripheral edge of the reference electrode.

The reference electrode is preferably in the form of a planar structure. The planar structure may be in the shape of a rectangle (e.g. a square or non-square rectangle) or a circle.

The reference electrode will typically be a metallic reference electrode. The reference electrode may comprise and preferably is a platinum, palladium, gold or silver electrode, with platinum and gold particularly preferred.

It is desirable to minimise thermal stress within the gas sensor in order to prevent changes in the reference environment as a result of cracks in the sensor.

The thermal stress ($\sigma$) of coatings on chips are related by coefficient of thermal expansion ($\alpha$), Young's modulus of elasticity (E) and the temperature change ($\Delta$T), covering the ambient temperature up to the firing temperature or the operating temperature, as follows:

$$\sigma = (\alpha_{chip} - \alpha_{coating}) \times E \times \Delta T$$

provides appropriate guidance on keeping the coefficient of thermal expansion ($\alpha_{coating}$) of the reference electrode/reference couple as close to that of the solid-state electrolyte chip ($\alpha_{chip}$) and on keeping Young's modulus (E) as low as possible. It is known that while the coefficient of thermal expansion is a property of the material, the effective Young's Modulus is both a function of the material and the degree of porosity prevailing in the delivered structure, with increase in porosity accompanied by a commensurate decrease in Young's modulus.

Thus, the reference electrode and the reference couple preferably have a coefficient of thermal expansion (CTE) that is close to that of the electrolytic chip on which they are provided.

It is generally preferred for the reference electrode to be formed of a single material, even though the material itself may be a composition comprising multiple components. Thus, the reference electrode is preferably formed as a single, preferably planar, structure of uniform material.

Though less preferred, in some embodiments, different regions of the reference electrode may be made from different materials. For instance, where the reference electrode comprises a bond pad (discussed below), the bond pad may be made of a different material from the rest of the reference electrode. Where different regions are made from different materials, the different regions are all preferably selected from the materials mentioned above.

The reference electrode may comprise a bond pad, *i.e.* a region of the reference electrode that is not in direct physical contact with the chip. Thus, the bond pad is electrically insulated from the chip other than through non-bond pad area (*i.e.* active region) of the reference electrode. The bond pad may be electrically insulated from the chip by an insulation layer.

The insulation layer preferably sits between the chip and the bond pad. The insulation layer will typically be in direct contact with both the chip and the bond pad.

Preferably, the bond pad of the reference electrode is electrically insulated from the chip by the same insulation layer that electrically insulates the bond pad of the sensing electrode from the chip.

Suitable materials for an insulation layer include glass and are discussed in greater detail below.

In alternative embodiments, the reference electrode may comprise a bond pad which is in direct physical contact with the chip, provided that it the bond pad is in a densified (*i.e.* non-porous) form. This ensures that a TPB, as described earlier, is not formed in the bond pad area of the reference electrode. It will be appreciated that, in these embodiments, the active region of the reference electrode is preferably still porous (as described above in greater detail).

In some embodiments, the only difference between the sensing electrode and the reference electrode is that the sensing electrode is open to the atmosphere in which the gas sensor is used, whereas the reference electrode is sealed in a reference environment.

In some embodiments, the gas sensor comprises a single reference electrode, *i.e.* no more than one reference electrode. However, in other embodiments, the gas sensor comprises multiple, *i.e.* two or more, such as two or three, reference electrodes.

For instance, the gas sensor may comprise two identical reference electrodes, with identical reference environments, so that one reference electrode can act as a backup in case of failure of the other. It will be appreciated that, for the reference electrodes to be considered identical, they must have the same composition and structure, including the presence or absence of coatings. For reference environments to be identical, they must contain the same reference couple.

Alternatively, where the gas sensor comprises multiple reference electrodes, the reference electrodes and/or the reference environment may differ from one another. These embodiments are particularly useful where the gas sensor is used in environments in which a range of temperatures are experienced, since higher operating temperatures lead to a small amount of electronic conductivity. In such cases, it is desirable that the difference in $pO_2$ between the test environment and the reference electrode is small (Kanekoa et al: Performance of a miniature zirconia oxygen sensor with a Pd-PdO internal reference (2005, Sensors and Actuators B: Chemical, 108 (1-2), 331-334)). Having a choice of reference electrodes with different $pO_2$ values is advantageous in ensuring the reference $pO_2$ is similar to the $pO_2$ of the test environment.

Thus, in some embodiments where the gas sensor comprises multiple reference electrodes, the reference electrodes differ from one another in their $pO_2$ values. This can be achieved by using reference electrodes that differ from one another in composition or structure, but is preferably achieved by using a different reference environment. A different reference environment can be achieved by using different reference couples in the reference electrodes.

*Electrolytic chip*

The sensing and reference electrodes are provided on an electrolytic chip. The chip is a planar structure, typically in the shape of a rectangle (*e.g.* a square or non-square rectangle). The chip is preferably monolithic.

The chip may have a thickness of at least 50 μm, preferably at least 75 μm, and more preferably at least 100 μm. The chip may have a thickness of up to 200 μm, preferably up to 175 μm, and more preferably up to 150 μm. Thus, the chip may have a thickness of from 50 to 200 μm, preferably from 75 to 175 μm, and more preferably from 100 to 150 μm.

The chip may have a geometric surface area, on each planar face, of at least 0.1 mm² and/or up to 25 mm². However, preferred chips have a geometric surface area, on each planar face, of at least 0.1 mm², preferably at least 0.2 mm², and more preferably at least 0.25 mm². The chip may have a surface area, on each planar face, of up to 5 mm², preferably up to 3 mm², and more preferably up to 1.5 mm². Thus, the chip may have a surface area, on each planar face, of from 0.1 to 5 mm², preferably from 0.2 to 3 mm², and more preferably from 0.25 to 1.5 mm². In some instances, the footprint may be even smaller, for instance up to 1 mm², up to 0.7 mm², or even up to 0.5 mm². It will be appreciated that the "geometric surface area" of each planar face of the chip is the same as the surface area of the surface on which the heater, the sensing electrode and the reference electrode are provided.

Preferably each peripheral edge of the chip is at least 0.25 mm, preferably at least 0.4 mm, and more preferably 0.5 mm in length. Preferably each peripheral edge of the chip is up to 5 mm in length, preferably up to 3 mm in length, and more preferably up to 1.5mm in length.

Thus, each peripheral edge of the chip may be from 0.25 to 5 mm, preferably from 0.4 to 3 mm, and more preferably from 0.5 to 1.5 mm in length.

The chip used in the present invention is a solid-state electrolyte. In preferred embodiments, the chip is a ceramic material such as a zirconia-based material. Zirconia-based materials comprise a zirconium dioxide. In preferred embodiments, the zircona-based material comprises a zirconium dioxide-based solid solution with a stabilising agent, typically a second oxide and most commonly $Y_2O_3$, added to stabilise the cubic crystallographic phase which is an ionic conductor.

The zirconia-based material may comprise at least 2 %, preferably at least 3 %, and more preferably at least 5 % by weight of a stabilising agent. The zirconia-based material may comprise up to 20 %, preferably up to 15 %, and more preferably up to 10 % by weight of a stabilising agent. Thus, the zirconia-based material may comprise from 2 to 20 %, preferably from 3 to 15 %, and more preferably from 5 to 10 % by weight of a stabilising agent.

Suitable stabilising agents include magnesium oxide (MgO), yttrium oxide ($Y_2O_3$, yttria), calcium oxide (CaO), hafnium oxide ($HfO_2$), scandium oxide ($Sc_2O_3$) and cerium trioxide ($Ce_2O_3$). In preferred embodiments, the chip material is yttria-stabilised zirconia (YSZ).

*Heater*

In addition to sensing and reference electrodes, the gas sensors of the present invention are provided with a heater. This allows the gas sensor to be configured for and used at a particular temperature or temperature range, thereby enhancing the accuracy of the measurements. In preferred embodiments, the heater facilitates the application of thermal cycling between a holding temperature and a sensing temperature (as discussed in greater detail elsewhere) to reduce power consumption and extend the lifetime of the sensor. The use of an embedded heater minimises the thermal stresses on the gas sensor that that can occur during repeated thermal cycling, while allowing the sensor to be heated quickly if required.

The heater is preferably planar. The heater may be in the form of a track. The track is preferably not straight, but rather windy, often referred to in the art as serpentine, so as to cover a larger area of the gas sensor. The heater may be a metal heater, such as a platinum heater.

The heater is preferably located in close proximity to both the reference electrode and the sensing electrode. The presence of a heater in close proximity to the electrodes, for instance because each of the components is disposed on a small surface, eliminates the effect of temperature fluctuations in the ambient atmosphere (as only the sensor temperature determines the temperature of the incoming gas) and also avoids the need for a temperature offset to compensate for the temperature difference between the electrodes and the heater.

For instance, the space between the heater and both of the reference electrode and the sensing electrode on the chip surface is preferably less than 500 $\mu$m, preferably less than 300 $\mu$m, and more preferably less than 200 $\mu$m. In some embodiments, the space between the heater and both of the reference electrode and sensing electrode may be even smaller, for instance less than 100 $\mu$m. Where the gas sensor comprises more than one sensing electrode and/or more than one reference electrode, the space between the heater and each of the reference and sensing electrodes on the chip surface is preferably less than 500 $\mu$m, preferably less than 300 $\mu$m, and more preferably less than 200 $\mu$m or even less than 100 $\mu$m. Preferably, the space between the heater and the reference electrode is substantially the same as the space between the heater and the sensing electrode.

It will be appreciated that the "space" between the heater and each of the electrodes represents the minimum straight-line distance between an edge of the heater and a peripheral edge of the electrode. It will also be appreciated that the minimum straight line distance between the heater and the reference electrode may be measured from a different edge of the heater from that used to measure the minimum straight line distance between the heater and the sensing electrode.

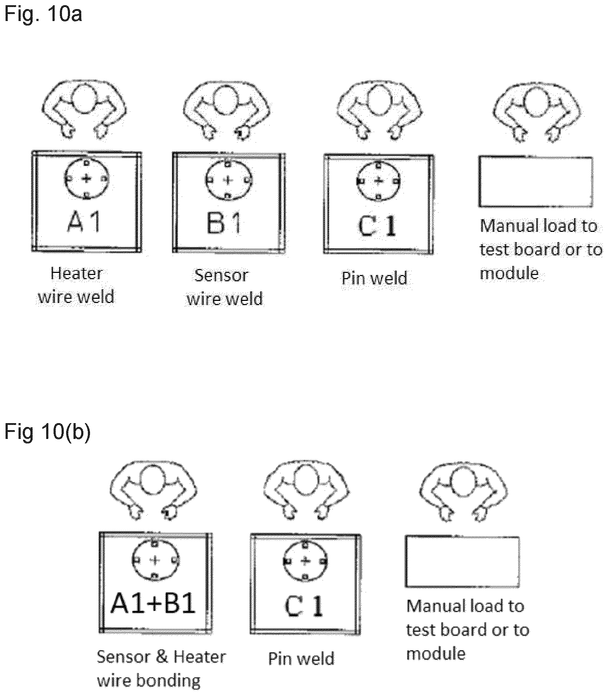

The heater is preferably embedded in the gas sensor, meaning that it is protected from the atmosphere, *e.g.* by a coating, in which the gas sensor is used and is configured to ensure minimal temperature difference between sensing and reference electrodes. The teaching in the prior art in the rare case where a heater is added, *e.g.* Fig. 10 in WO 2013/160271 A1, describes a heater element positioned externally on one side of a two-sided sensor design, clearly resulting in temperature disparities between both electrodes and as a result, inaccuracies in the resulting measurements.

The use of an integrated heater allows the gas sensor to be a stand-alone article. Having the integrated heater preferably embedded in the sensor provides more uniform heating of the entire sensor thereby minimising temperature differences between the sensing and reference electrodes *e.g.* as compared to sensors in which an integrated heater is attached to an outer surface of the device.

The heater, the sensing electrode and the reference electrode are provided on the same surface of the chip. In particularly preferred embodiments, the heater sits in the same plane of the sensor as the sensing and reference electrodes. It will be appreciated that when objects are described as sitting in the "same plane", this means that a planar cross-section (parallel to the chip) can be taken through the sensor which contains the all of the objects. However, other planar cross-sections through the sensor may exist in which only a subset of the objects are found. For instance, where the electrodes are in direct contact with the chip, but the heater is disposed on an insulation layer on the surface of the chip (discussed in greater detail below), a planar cross-section through the insulation layer would reveal the electrodes but not the heater. However, the heater and electrodes may still be considered "co-planar" (or in the same plane) where a different planar cross-section reveals the electrodes and heater.

In some embodiments, the heater is embedded between layers of insulation. The materials used in the insulation layers may be the same or different, but are preferably the same. Similarly, the thickness of the insulation layers may be the same or different, but are preferably the same.

An insulation layer typically sits between the electrolytic chip and the heater. This is to avoid electrical interference between the chip and heater. The insulation layer will typically be in direct contact with both the chip and the heater. This insulation layer is preferably the same insulation layer that is used to electrically insulate the bond pads of the reference and sensing electrodes from the chip, for instance where the bond pads are not densified.

In some embodiments, the upper surface of the heater is left uncovered. In other embodiments, an insulation layer sits on the upper surface of the heater. It will be appreciated that the upper surface is the surface that faces away from the chip. This insulation layer may also service as the sealing layer that is used to seal the reference electrode. However, in preferred embodiments, a separate sealing layer is used to seal the reference electrode.

The insulation layer that sits on the upper surface of the heater may, if present, cover at least 50 %, preferably at least 65 %, and more preferably at least 80 % of the surface area of the upper surface of the chip. The insulation layer may cover up to 95 %, preferably up to 92 %, and more preferably up to 90 % of the surface area of the upper surface of the chip. Thus, the insulation layer may cover from 50 to 95 %, preferably from 65 to 92 %, and more preferably from 80 to 90 % of the surface area of the upper surface of the chip.

Suitable materials for an insulation layer include glass and are discussed in greater detail below.

*Insulation layers and sealing layer*

As mentioned above, the gas sensor of the present invention may comprise one or more insulation layers (directly or indirectly) on the upper surface of the chip.

In some embodiments, the gas sensor may comprise one or more insulation layers on the underside of the chip, *i.e.* the planar surface of the chip on which the electrodes and heater are not provided. These embodiments are preferred where one or more insulation layers are present on the upper surface of the chip. The insulation layer(s) on the underside of the chip typically cover at least 80%, preferably at least 90%, and more preferably the entire surface area of the underside of the chip.

The total thickness and the composition of the insulation layer(s) on the underside of the chip is preferably substantially the same as the total thickness and composition of the insulation layer(s) on the upper surface of the chip. This helps to prevent curvature of the chip during use due to relief of thermal stress.

It will be appreciated that "substantially" the same allows small differences, such as the presence of small windows in an insulation layer on the upper surface of the chip (to allow direct contact of the electrodes to the chip) but the absence of corresponding windows on the underside of the chip. In this regard, insulation layers on the underside of the chip are only preferred where the insulation layer on the upper surface of the chip covers a significant portion of the chip surface area. Thus, where an insulation layer covers at least 75 % of the surface area of the upper surface of the chip, then a corresponding insulation layer on the underside of the chip is preferred.

As mentioned previously, an insulation layer typically sits between the chip and the heater and this insulation layer preferably also serves as the insulation layer that sits between the chip and the bond pads of the electrodes (if needed). The insulation layer that sits between the chip and the heater may have a thickness of at least 5 $\mu$m, preferably at least 8 $\mu$m, and more preferably at least 10 $\mu$m. The insulation layer may have a thickness of up to 50 $\mu$m, preferably up to 40 $\mu$m, and more preferably up to 30 $\mu$m. Thus, the insulation layer may have a thickness of from 5 to 50 $\mu$m, preferably from 8 to 40 $\mu$m, and more preferably from 10 to 30 $\mu$m. Where an insulation layer sits between the chip and the heater, an insulation layer is preferably provided on the underside of the chip preferably having the same composition and thickness as the insulation layer that sits between the chip and the heater.

An insulation layer may sit on the upper surface of the heater, or the heater may be left open to the environment. Where an insulation is present on the upper surface of the heater, this insulation layer may also serve as the sealing layer for the reference electrode. However, as explained in greater detail below, the sealing layer of the reference electrode is preferably separate from the insulation layer on the upper surface of the heater.

The insulation layer that sits on the upper surface of the heater may have a thickness of at least 5 $\mu$m, preferably at

least 8 $\mu$m, and more preferably at least 10 $\mu$m. The insulation layer may have a thickness of up to 50 $\mu$m, preferably up to 40 $\mu$m, and more preferably up to 30 $\mu$m. Thus, the insulation layer may have a thickness of from 5 to 50 $\mu$m, preferably from 8 to 40 $\mu$m, and more preferably from 10 to 30 $\mu$m. Where an insulation layer sits on the upper surface of the heater, an insulation layer is preferably provided on the underside of the chip preferably having the same composition and thickness as the insulation layer that sits on the upper surface of the heater.

The insulation layers preferably comprise, and more preferably consist of, a composition with a coefficient of thermal expansion ($\alpha$) that is close to that of the solid-state electrolyte chip on which it is provided, and preferably higher so that the insulation material, typically glass, is in compression on cooling. For instance, for a YSZ with an $\alpha$ of about 10.3 $\times$ $10^{-6}$/°C, a desirable $\alpha$ for the insulation glass should be in the region of 10.5 - 11.5 $\times$ $10^{-6}$/°C for thin YSZ chips (< 200 microns in thickness). It is appreciated by those skilled in the art that glasses may undergo partial crystallisation during heating and the resultant $\alpha$ of the partially crystallised glass may differ from that of the pure glass. The partially crystallised glass layer may have superior mechanical behaviour due to the glass being reinforced with the second phase crystalline material, particularly when the second phase is well dispersed and of a fine grain size.

The insulation layers preferably comprise, and more preferably consist of, a composition with a Young's modulus of less than 80 GPa, and preferably less than 70 GPa.

Suitable materials for the insulation layers include glass, and specifically electrically insulating glass. For instance, the glass may be an aluminosilicate glass. The aluminosilicate glass is preferably an alkaline earth aluminosilicate glass. Suitable materials for the insulation layers may have a flow point of at least 950 °C, such as from 950 to 1050 °C.

Glass insulation layers are highly preferred since these allow the sensor to be treated more like a "glazed ceramic". Unlike ceramic insulation layers, such as aluminium oxide, during manufacture the glass insulation layer softens above its flow point and, as it becomes more fluid, wets the underlying electrolyte chip surface to ensure intimate contact and a flat surface. In contrast, crystalline ceramic insulation layers must be fired to much higher temperatures to form an interfacial bond with the electrolyte and differences in coefficients of thermal expansion between ceramic insulation layers and the electrolyte chip cause thermal stresses.

Each of the insulation layers may have a different composition, but they are preferably the same in composition. In particular, the insulation layers that cover a large cross-sectional area of the chip (*e.g.* at least 75 % of the surface area of a side of the chip) are preferably the same in composition as one another, as this minimises thermal stresses in the gas sensor.

The sealing layer for the reference electrode may comprise the materials described above as preferred for insulating layers. For instance, the sealing layer may have a thickness, a Young's modulus and $\alpha$ as described above in relation to the insulation layer. Suitable materials for the sealing layer are as described above for the insulating layer and, as such, the sealing layer will typically be a glass layer such as an aluminosilicate glass.

However, the sealing layer preferably has a lower flow point than the insulation layer(s). Where an insulation layer is present on the upper surface of the heater and this insulation layer also serves as the sealing layer for the reference electrode (an "insulation-sealing layer"), the insulation-sealing layer may have a lower flow point than other insulation layers in the sensor. This allows a second heat-firing step - that required to seal the reference electrode - to be carried out at a lower temperature than the 'glaze' firing to ensure that the glaze coating does not flow again which would lead to loss of definition around the electrodes, in particular the bond pads, and the generation of bubbles from dissolved gases.

For instance, the sealing layer (or the insulation-sealing layer) may have a lower flow point than the insulating later that sits between the chip and the heater, and preferably a lower flow point than the insulating later that may be provided on the underside of chips in which an insulating layer sits between the chip and the heater. Where an insulation layer is present on the upper surface of the heater, and this insulation layer is separate to the sealing layer, then the sealing layer may have a lower flow point than the insulation layer that is present on the upper surface of the heater, and preferably a lower flow point than the insulating later that may be provided on the underside of chips in which an insulating layer is present on the upper surface of the heater.

Preferably, the sealing layer (or the insulation-sealing layer) has a lower flow point than all of the insulation layers that are used in the sensor.

The lower flow point may be at least 50 °C, preferably at least 75 °C, and more preferably at least 100 °C lower than that of the other insulation layer(s) in the sensor. For instance, the sealing layer or the insulation-sealing layer may have a flow point of from 700 to 900 °C, such as from 750 to 850 °C. As mentioned above, the insulation layer(s) that are present in the sensor may have a flow point of at least 950 °C, such as from 950 to 1050 °C.

The flow point of a material, such as a glass, is the temperature at which the material has a viscosity of 10,000 Pa·s. This may be measured using conventional techniques, such as according to ASTM C965 - 23 (preferably procedure A).

*Power*

The gas sensors of the presentation invention advantageous exhibit low power requirements. For instance, the gas sensor may have a power consumption of up to 1000 mW, preferably up to 500 mW, and more preferably up to 250 mW when operating continuously at 550 °C. The gas sensor may have a power consumption of at least 25 mW, typically at least 50 mW, and more typically at least 100 mW when operating continuously at 550 °C. Thus, the gas sensor may have a power consumption of from 25 to 1000 mW, preferably from 50 to 500 mW, and more preferably from 100 to 250 mW. These values are the power consumption when the sensor is operating continuously at 550 °C. Continuous operation means that the sensor is operated without interruption at the operating temperature.

As mentioned elsewhere, sensors of the present invention are preferably operated intermittently at a holding temperature (*e.g.* of up to 300 °C) and a sensing temperature (*e.g.* of from 500 to 650 °C). This may be achieved by operating the sensor in a pulse-powered or intermittently powered mode. The holding temperature may be room temperature - *i.e.* the sensor is not heated and allowed to reduce to the temperature of the environment in which it used - or, to reduce thermal stress, a temperature which is higher than room temperature but below that of the sensing temperature. For instance, the holding temperature may be from 200 to 300 °C, but this may vary depending on application (*e.g.* battery powered sensors may have a lower holding temperature than mains powered sensors). When a sensor is operated in an intermittently powered mode, its power consumption will be lower than when it is operated continuously.

In preferred embodiments, the gas sensor is battery-powered. This enables the gas sensor to be fully portable.

*Gas sensing device*

The gas sensor of the present invention may be used without a casing; however it is generally preferred for the gas sensor to be housed in a casing in order to provide some further protection to the gas sensor. Thus, the present invention provides a gas sensing device which comprises a gas sensor of the present invention housed in a casing.

The casing will generally comprise an aperture which is open to the external atmosphere, so that the gas sensor is exposed to the atmosphere in which the gas sensing device is used. A carbon filter, such as an activated carbon filter, may cover the aperture. This helps to reduce the amount of contaminant gases that come into contact with the sensing electrode.

*Methods of use*

The gas sensors of the present invention may be used to measure the concentration of a variety of gases, but they are preferably used for measuring the concentration of oxygen gas in an atmosphere.

The sensors of the present invention may be used in high-temperature environments, for instance in an engine such as an internal combustion engine. Thus, the sensors are preferably capable of withstanding temperatures of 850 °C (dependent on the characteristics of the insulation glass selected), though they will typically be operated at a temperature of 500 to 650 °C. In preferred embodiments, methods of using a sensor comprise operating the sensor intermittently at a holding temperature, *e.g.* of up to 300 °C, and a sensing temperature which is higher than the holding temperature, *e.g.* a sensing temperature of from 500 to 650 °C. These embodiments are discussed in greater detail elsewhere.

The sensors may also be used for detecting gases in other environments, such as in a factory or scientific laboratory. Examples of factories in which gas levels should be controlled include factories producing medical equipment, food processing plants, waste management plants, nitrogen generation plants and semiconductor manufacturing processing plants.

*Synthesis method*

A significant advantage of the gas sensors of the present invention is that they are easily manufacturable at relatively low-cost. For instance, a wafer fabrication process allows thousands of individual sensor units to be patterned on a wafer, thanks to the preferred miniature size of each chip unit, the use of a simple monolithic chip structure having a single electrolytic chip substrate, and the single sided nature of the sensors dispensing with the need to flip the chip during manufacture. These features mean that the sensors of the present invention, while preparable manually, lend themselves to automation.

The present invention provides a method of preparing a gas sensor of the present invention, the method comprising: applying a sensing electrode and a reference electrode to a surface of a planar electrolytic chip, and providing a heater on the, preferably glass-insulated but otherwise blank, surface of the chip. A glass insulated chip has an insulating glass layer on its upper, and preferably also its lower, surface.

In some embodiments, the method may comprise preparing the glass-insulated chip by depositing the glass insulation layer(s) on the chip. The glass insulation layer(s) may be deposited in the form of particles of the insulating glass using particle-suspension deposition methods. For instance, inkjet, droplet or screen-printing methods may be used, such as screen-printing an ink comprised of glass particles suspended in a water-based or organic medium. Once deposited, the glass insulation layer(s) may be fired at or above the flow point of the glass insulation layer(s) in a first heat treatment step. This allows a consolidated and continuous coating to form on the chip surface.

The electrodes are preferably applied to the chip by sputter deposition (also known as physical vapour deposition), though other methods may also be used such as chemical vapour deposition, screen-printing or inkjet printing may also be used. Where the bond pad regions of the electrodes are in direct contact with the chip, they may be densified by overprinting the bond pad region e.g. with platinum ink.

The method may further comprise depositing a filter coating on the sensing electrode.

Where one or more further insulation layers (i.e. layers beyond those present on the upper and preferably lower chip surface) are present in the gas sensing device, the method may comprise applying these layers e.g. by screen-printing, for instance screen-printing an ink comprised of glass particles suspended in a water-based or organic medium. Other methods include inkjet and droplet deposition. Once deposited, the further insulation layer(s) may be fired at or above their flow point in a first heat treatment step.

The method may comprise applying depositing a reference couple and a sealing glass layer to the reference electrode. Once deposited, the sealing glass layer may be fired in a a second heat treatment step, at a temperature at or above the flow point of the sealing layer but preferably below the flow point of the one or more insulation layer(s).

Preferred methods comprise a first heat treatment step for fusing the one or more insulation layers to the chip, and a second heat treatment step for sealing the reference electrode with the sealing layer. The second heat treatment step is preferably carried out at a lower temperature than the first heat treatment step.

Preferably, the first heat treatment step is carried out at a temperature at or above the flow point of the one or more insulation layers. The second heat treatment step is carried out at a temperature at or above the flow point of the sealing layer, but below the flow point of the one or more insulation layer(s).

Where multiple insulation layers are used, these are preferably all applied and heat treated before the sealing layer is applied and second heat treatment carried out. Thus, multiple insulation layers may be applied in separate stages with a first heat treatment step after each stage, or a single first heat treatment step may be carried out after all of the insulation layers have been applied. Heat treatment steps may be carried out either in air or more preferably in a controlled atmosphere with reduced oxygen levels.

The construction of the sensor may proceed with, but is not necessarily confined to, the following sequence of steps.

The glass insulation layers are deposited, preferably on both sides of the chips, and fired to their flow point in a first heat treatment step to provide a glass-insulated chip. The flow point may be held for sufficient time to ensure uniform coverage of the chip and a smooth bubble-free surface.

The porous electrodes are then deposited on the upper surface of the glass-insulated chip, for instance by sputter deposition. The electrodes are, at least in part, deposited over gaps (or windows) in the insulation layer to allow direct contact of the electrodes with the chip surface.

The, preferably platinum, heater track may be deposited on the glass-insulated chip, for instance by screen-printing or sputter deposition. This may take place before or after deposition of the electrodes but will generally be after. In some embodiments, the glass insulation layer on the upper surface of the chip may comprise a pre-deposited adhesion layer for the heater track. Like the electrodes, the heater is deposited on the upper surface of the glass-insulated chip.

Bond pads for the platinum heater track and the electrodes may be deposited, for instance by screen-printing or sputter deposition. Typically, a bond pad will be deposited at bonds end of the heater track, on the sensing electrode, and on the reference electrode.

The chip may then be fired at a temperature at or below that of the flow point of the insulation layers. This 'hardens on' and sinters the heater track and bond pads.

Should a protective glass layer be required for the heater due to the aggressive nature of the application environment, it is at this stage that a protective insulation glass layer is applied on the heater and the underside of the wafer and heat-treated to the appropriate temperature and time to achieve uniform flow and coverage.

Finally, the reference couple and the associated sealing glass layer are deposited, and a second heat treatment step is carried out, either in air or more preferably in a controlled atmosphere with reduced oxygen levels. The second heat treatment step is carried out at a temperature at or above the flow point of the sealing layer, but below the flow point of the one or more insulation layer(s).

It will be appreciated that the sequence and description of steps provided above is not solely definitive and variations in order and deposition methods are possible.

The intention of the heat treatment steps is to burn off all sacrificial organic material used in the deposition formulations and to apply sufficient heat to sinter or seal and functionally activate the heater and electrode systems.

In some embodiments, the method may comprise preparing multiple gas sensors of the present invention by: depositing multiple sensing electrodes and multiple reference electrodes onto the surface of a planar electrolytic wafer, providing multiple heaters on the surface of the wafer, and cutting the wafer to provide multiple gas sensors of the present invention. Preferably, a single wafer may be cut to provide at least 10 gas sensors, preferably at least 100 gas sensors, and more preferably at least 1,000 gas sensors of the present invention. The wafer that is cut to provide multiple gas sensors may have a width and/or length (in the case of a square or rectangular wafer) and diameter (in the case of a round wafer) of at least 10cm, and preferably up to 15 cm.

The wafer and components provided thereon are preferably heat-treated before the wafer is cut into the individual gas sensors. Thus, the wafer and its components are preferably in the form of a fully patterned wafer before it is cut. A water-cooled diamond-tipped saw is particularly suitable for cutting the wafer into multiple gas sensors. The invention will now be described by way of the following non-limiting examples.

## Examples

### Example 1: a sensor chip assembly

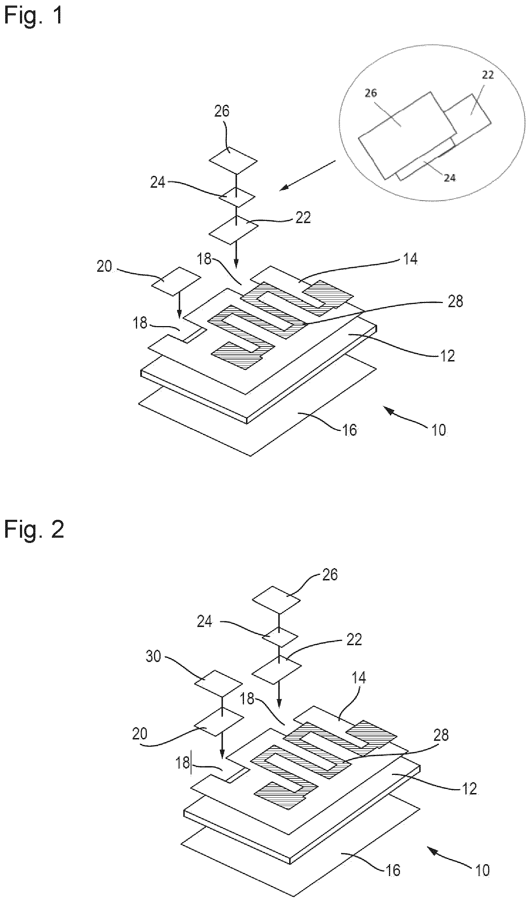

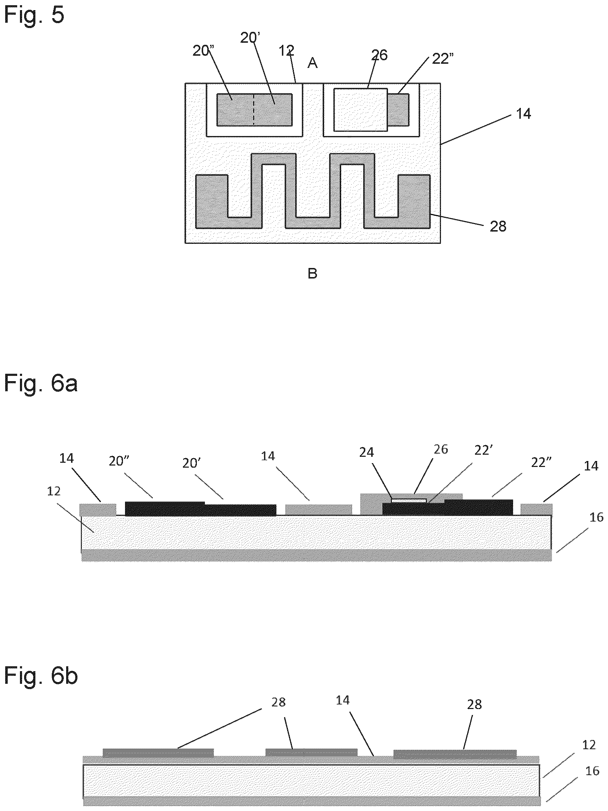

A 120 $\mu$m thick YSZ ($8\%Y_2O_3$-$ZrO_2$) 4 or 6 inch square wafer is patterned, coated with different layers and heat-treated before being diced into individual 1 mm $\times$ 2 mm rectangular gas sensors. One of the gas sensors (10) is shown in Figure 1 in exploded view. The same gas sensor (10) is shown from above in Figure 5, and from sides A and B (marked in Figure 5) in Figures 6a and 6b.

A screen-printed passivation alkaline-earth aluminosilicate glass layer (14) is present on the upper surface of the YSZ chip (12) and covers 70 to 90 % of the chip surface. A glass layer (16) identical in composition and thickness to the passivation layer (14) is also present on the underside of the chip (12).

On the upper surface, there are two rectangular-shaped spaces (18) in the glass (14). Into these spaces (18), a sensing electrode (20) and a reference electrode (22) are deposited, for instance by sputter deposition, as porous platinum blocks. In the embodiment depicted in Figure 1, the electrodes (20 and 22) are deposited within the spaces (18) in the glass insulation layer (14). The platinum block electrodes (20 and 22) are partially overprinted by a platinum ink, e.g. on about 50% of the surface area of the platinum blocks, to provide a densified bond pad region (20" and 22"). The surface area that has not been overprinted functions as the active region (20' and 22') of the electrodes (20 and 22). The active regions (20' and 22') and bond pad regions (20" and 22") can be seen in Figures 5 and 6a.

In other embodiments (not shown), the platinum blocks (20 and 22) cover the glass free area (18) and a similar area of adjoining glass coating (14). In these embodiments, the platinum blocks (20 and 22) act jointly as the electrodes in intimate contact with the surface of the YSZ chip (12) and as bond pads where they have covered the glass surface (14).

The platinum block on the lefthand-side as shown in Figure 1 is the sensing electrode (20) as it is open to the surrounding atmosphere. The platinum block on the righthand-side acts as the internal reference electrode (22) where a metal/metal oxide reference couple (24) is deposited over the glass-free area (18), which is then overprinted with a sealing glass (26) to provide a hermetic seal on firing. The area covered by the sealing glass (26) extends beyond the footprint of the both the metal/metal oxide reference couple (24) and the active region (22') of the reference electrode (22) to ensure the reference environment is sealed fully from the surrounding atmosphere.

The heater (28), which is a planar track, may be coated with an outer passivation glass layer (not shown) for protection purposes on its upper surface, which in turn requires a second glass layer on the underside (not shown) to negate any curvature in the chip due to thermal stresses. The application of the sealing glass (26) may be combined with the application of the outer passivation glass layer (not shown) to protect the heater to condense both steps into one.

### Example 2: a second sensor chip assembly

A further gas sensor (10) is shown in Figure 2 in exploded view. This sensor is very similar to that of Example 1, but has a thick filter coating (30) deposited on the sensing electrode (20) to remove VOC contaminants. The filter is composed of either a microporous structure composed solely of an oxygen-rich metal oxide such as NiO, $Cr_2O_3$, MnO, CoO or $La_2O_3$, or an inner layer of an oxygen-rich metal oxide such as NiO, $Cr_2O_3$, MnO, CoO or $La_2O_3$ and a thinner outer layer composed of Au/Pt/Pd-loaded $Cr_2O_3$/$In_2O_3$/$SnO_2$. In fast flowing non-equilibrium environments, the coating (30) can serve also to promote the establishment of thermodynamic equilibrium of the gaseous atmosphere in the vicinity of the sensing electrode (20).

### Example 3: a third sensor chip assembly

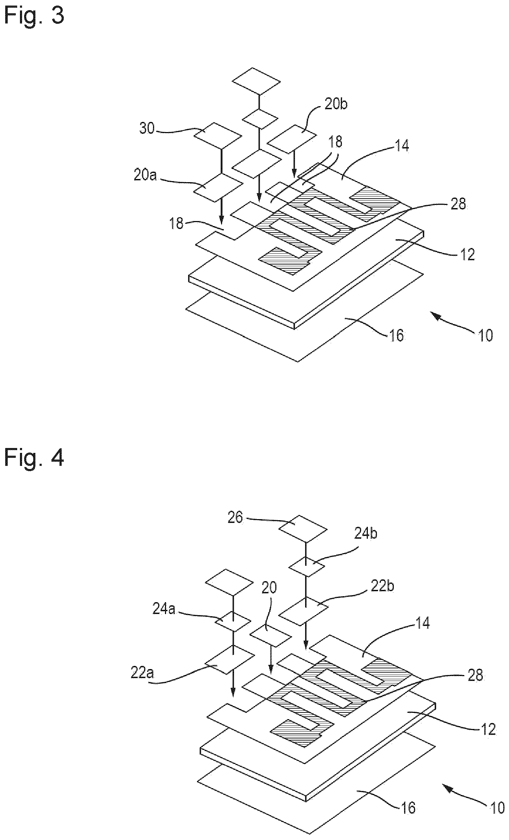

A further gas sensor (10) is shown in Figure 3 in exploded view. In this embodiment, the gas sensor (10) functions as a dual sensor with two sensing electrodes (20a, 20b), where a first sensing electrode (20a) is has a filter coating (30) as in Figure 2, and a second sensing electrode (20b) is uncoated as in Figure 1. This allows a pure oxygen measurement and a composite oxygen/VOC measurement to be obtained. By comparing and analysing the information from sensing

EP 4 703 718 A1

electrodes (20a, 20b) with and without filter coatings (30), both oxygen and VOC levels can be determined.

Example 4: a fourth sensor chip assembly

A further gas sensor (10) is shown in Figure 4 in exploded view. In this embodiment, the gas sensor is provided with two sealed reference electrodes (22a, 22b), either of identical composition to provide a back-up in case of one being faulty or, as depicted, comprising a different reference couple (24a, 24b) so as to give flexibility in choice in the reference $pO_2$ when different operating temperatures are used.

Example 5: a sensor chip supported in a casing

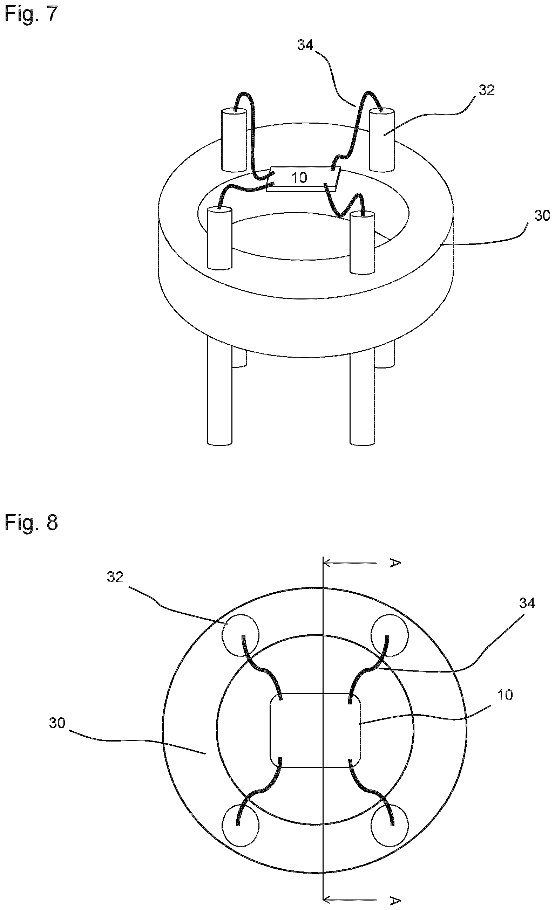

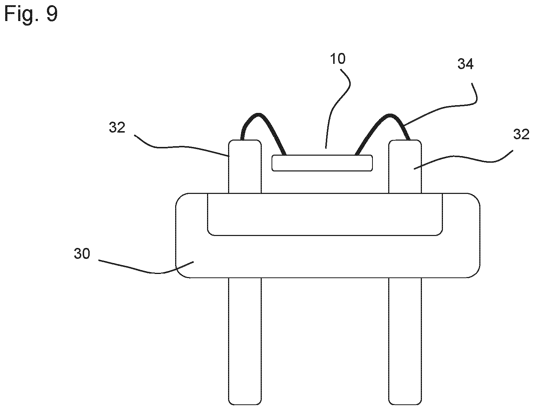

Figures 7 to 9 show a sensor chip assembly (10) of the present invention supported in a casing (30). Figure 7 is a perspective view, Figure 8 is a plan view, and Figure 9 is a side view.
The casing (30) in which the sensor (10) is held comprises four pins (32) which provide an electrical connection to the sensor (10) via wires (34). Although not clear from the figures, two wires are connected to bond pads at either end of a serpentine heater, a third wire is connected to the bond pad of the sensing electrode, and a fourth wire is connected to the bond pad of the reference electrode. The sensor chip assembly (10) when heated is thermally isolated from the casing (30) as it is suspended in midair. Heat loss is primarily by convection from the surface of the chip (10) and, to a lesser extent, by conduction through the wires (34).

Example 6: a sensor chip assembly production line

Figure 10 shows the various process steps involved in assembling a sensor as depicted in Figures 7 to 9 on a manual assembly line where labour costs can dominate overall manufacturing costs. By switching from a two-sided chip (Figure 10a) to a single-sided chip (Figure 10b), a manual process step of flipping the chip is eliminated. Moreover, a single-sided chip lends itself more easily to automation, and therefore large reductions in manufacturing costs.

Example 7: power consumption of a sensor

A 120 $\mu$m thick YSZ ($3\%Y_2O_3$-$ZrO_e$) 4 inch square substrate was patterned with 3 designs such that the individual units comprising the sensor chip were of 4 different sizes: 1 mm $\times$ 1 mm (1 mm$^2$), 1.2 mm $\times$ 0.75 mm (0.9 mm$^2$) and 0.6 mm $\times$ 0.6 mm (0.36 mm$^2$). Each design is coated by screen-printing with an insulating glass layer on both sides, a heater and a sensing and reference electrode are then applied to the same surface of the substrate.
Following dicing, the sensor chip was mounted onto a 4-pinned TO-5 can by means of spot welding 50 $\mu$m diameter platinum wires between the sensor bond pads and the pin heads (see Figures 7-9). Packaging the chip in this way allowed chip to be connected to a power supply circuit by means of the pins, thereby allowing controlled heating experiments to be carried out. All chips had a minimum of two wires to ensure connection of the heater track to a power supply circuit, with the option of an additional one or two wires (representing connection to electrodes bond pads) to explore the contribution of the wires to overall power consumption. By incorporating the heater into a constant-resistance Wheatstone bridge circuit arrangement, the chip was heated to controlled temperatures in the range of 400 to 600 °C. This set-up enabled the power consumption to be calculated at each test temperature using the formula:

$$\text{power consumption (mW)} = R \times I^2$$

where: R is the resistance of the platinum heater track at the given temperature, and I is the current needed to achieve that resistance. For each temperature, approximately 60 measurements were made. The results are shown in Table 1.
The results for the combination of 0.6 $\times$ 0.6 mm$^2$ with 4 wires were not obtained by experimental measurement but by a simple linear regression model based on the measured data set of 1060 points, which gave an R$^2$ value of 0.967 and a standard error of 13. Table 2 shows the corresponding standard deviation for the data sets in Table 1.

Table 1: Power consumption values *versus* temperature for various chip geometries and wire combinations:

| Temp (°C) | 1.25 × 0.75mm$^2$ 4 wires | 1.0 × 1.0mm$^3$ 4 wires | 1.25 × 0.75mm$^2$ 4 wires | 0.6 × 0.6mm$^2$ 2 wires | 1.0 × 1.0mm$^2$ 3 wires | 0.6 × 0.6mm$^2$ 2 wires | 0.6 × 0.6mm$^2$ 4 wires |
|---|---|---|---|---|---|---|---|
| 400 | 173 | 186.5 | 176.2 | 95.3 | 167.8 | 99.8 | 115 (P) |
| 500 | 237.1 | 255.6 | 240.9 | 129.5 | 231.3 | 135.3 | 173.8 (P) |

(continued)

| Temp (°C) | 1.25 × 0.75mm² 4 wires | 1.0 × 1.0mm³ 4 wires | 1.25 × 0.75mm² 4 wires | 0.6 × 0.6mm² 2 wires | 1.0 × 1.0mm² 3 wires | 0.6 × 0.6mm² 2 wires | 0.6 × 0.6mm² 4 wires |
|---|---|---|---|---|---|---|---|
| 600 | 309.4 | 331.5 | 313.17 | 167.8 | 303 | 175.1 | 232.6 (P) |
| (P) = data not measured but predicted from a linear regression model based on the measured data. | | | | | | | |

Table 2: Standard deviation for the values shown in Table 1 where each value represents the mean of 60 data points:

| Temp (°C) | 1.25 × 0.75mm² 4 wires | 1.0 × 1.0mm² 4 wires | 1.25 × 0.75mm² 4 wires | 0.6 × 0.6mm² 2 wires | 1.0 × 1.0mm³ 3 wires | 0.6 × 0.6mm² 2 wires | 0.6 × 0.6mm² 4 wires |
|---|---|---|---|---|---|---|---|
| 400 | 1 | 1 | 1 | 0.4 | 1 | 0.6 | 13 (P1) |
| 500 | 0.6 | 0.8 | 0.7 | 0.6 | 1.6 | 0.5 | 13 (P1) |
| 600 | 0.8 | 9.6 | 9.3 | 5 | 9.3 | 0.9 | 13 (P1) |
| (P1) = standard error in the linear regression model | | | | | | | |

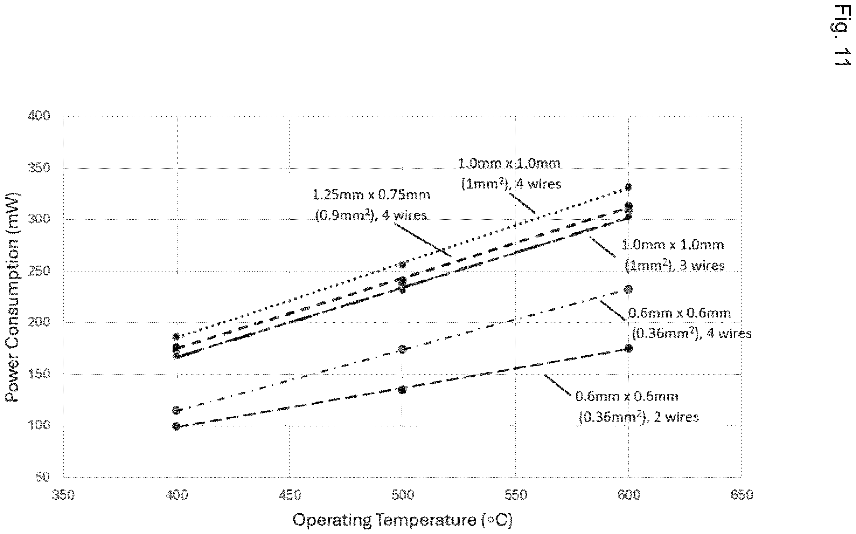

To achieve portability a sensor should be powered by batteries, and low energy consumption by the sensor is therefore critical. Heat losses occur primarily by convection from the sensor chip surface and by conduction through the wires (radiation losses are assumed to be minor at the main temperatures of interest of from 400 to 600 °C). The plot in Figure 11 demonstrates the combined effect of addressing both of these losses through design changes to the sensor assembly. Convection losses are addressed by reducing the chip size or more specifically, the geometric surface area, and conduction losses by reducing the number of wires (or if that is not possible for reasons of heater control and signal measurement), then in accordance with heat loss principles by reducing the diameter of the platinum wires.

## Claims

1.  A potentiometric gas sensor comprising a planar electrolytic chip having a sensing electrode, a sealed reference electrode, and a heater provided thereon,

    wherein the heater, the sensing electrode and the reference electrode are provided on the same planar surface of the chip, and
    wherein the gas sensor is a miniaturised gas sensor in which the planar surface of the chip on which the heater, the sensing electrode and the reference electrode are provided has a surface area of from 0.1 to 5 mm².

2.  The gas sensor of Claim 1, wherein:

    the space between the reference electrode and the sensing electrode on the chip surface is preferably less than 500 $\mu$m, preferably less than 300 $\mu$m, and more preferably less than 200 $\mu$m, such as less than 100 $\mu$m; and/or
    the space between heater and each of the reference electrode and the sensing electrode on the chip surface is preferably less than 500 $\mu$m, preferably less than 300 $\mu$m, and more preferably less than 200 $\mu$m, such as less than 100 $\mu$m.

3.  The gas sensor of Claim 1 or Claim 2, wherein the electrolyte chip is a ceramic material, and preferably a zirconia-based material such as yttria-stabilised zirconia.

4.  The gas sensor of any preceding claim, wherein the chip has:

    a thickness of from 50 to 200 $\mu$m, preferably from 75 to 175 $\mu$m, and more preferably from 100 to 150 $\mu$m; and/or
    a surface area on the planar surface of the chip on which the heater, the sensing electrode and the reference electrode are provided of from 0.2 to 3 mm², and more preferably from 0.25 to 1.5 mm².

5.  The gas sensor of any preceding claim, wherein an insulation layer, preferably a glass insulation, sits between the chip and the heater, the insulation layer preferably having a thickness of a thickness of from 5 to 50 $\mu$m, preferably from 8 to

40 μm, and more preferably from 10 to 30 μm; and wherein an insulation layer is preferably provided on the underside of the chip, preferably having the same composition and thickness as the insulation layer that sits between the chip and heater.

6. The gas sensor of any preceding claim, wherein a filter coating is present on the surface of the sensing electrode in order to reduce the detection of contaminant gases, such as combustible gases, by the sensing electrode, wherein the filter coating preferably comprises a zeolite or an oxidation catalyst such as a metal oxide or a metal oxide loaded with a precious metal selected from platinum, palladium, rhodium or gold.

7. The gas sensor of any preceding claim, wherein the reference electrode is sealed with a sealing layer, preferably a glass sealing layer, wherein the sealing layer has a lower flow point than any insulation layers that are used in the sensor.

8. The gas sensor of any preceding claim, wherein:

multiple sensing electrodes are provided on the chip surface, the multiple sensing electrodes preferably differing from one another in composition and/or structure; and/or
multiple reference electrodes are provided on the chip surface, each having a reference environment, the multiple reference electrodes:

being identical to one another and having identical reference environments;
differing from one another in composition and/or structure; or
having different reference environments from one another, preferably because the reference environments comprise different reference couples.

9. The gas sensor of any preceding claim, wherein the gas sensor has a power consumption of from 25 to 1000 mW, preferably from 50 to 500 mW, and more preferably from 100 to 250 mW when operating continuously at 550 °C.

10. The gas sensor of any preceding claim, wherein the gas sensor is configured to operate intermittently at a holding temperature, e.g. of up to 300 °C, and a sensing temperature which is higher than the holding temperature, e.g. a sensing temperature of from 500 to 650 °C.

11. A potentiometric gas sensor comprising a planar electrolytic chip having a sensing electrode, a sealed reference electrode, and a heater provided on the same planar surface of the chip; wherein an insulation layer sits between the chip and the heater, and wherein the reference electrode is sealed with a sealing layer having a lower flow point than the insulation layer that sits between the chip and the heater.

12. A gas sensing device which comprises a gas sensor of any preceding claim housed in a casing, the casing preferably comprising an aperture which is open to the external environment and a carbon filter covering the aperture.

13. A method of detecting a gas, such as oxygen, in an environment, said method comprising using a gas sensor as defined in any of Claims 1 to 11 or a gas sensing device as defined in Claim 12 to measure the amount of the gas in the environment, wherein the method preferably comprises operating the gas sensor intermittently at a holding temperature, e.g. of up to 300 °C, and a sensing temperature, e.g. of from 500 to 650 °C, which is higher than the holding temperature.

14. A method of preparing a gas sensor as defined in any of Claims 1 to 11, the method comprising: applying a sensing electrode and a sealed reference electrode to a surface of a planar electrolytic chip; and providing a heater on the surface of the chip, wherein the heater, the sensing electrode and the reference electrode are provided on the same surface of the chip.

15. The method of Claim 14, wherein the method comprises providing the sealed reference electrode by sealing a reference electrode with a sealing layer, and preferably wherein the method comprises applying one or more insulation layers to the electrolytic chip, and wherein the method comprises a first heat treatment step for firing the one or more insulation layers to the chip, and a second heat treatment step for sealing the reference electrode with the sealing layer, wherein the second heat treatment step is carried out at a lower temperature than the first heat treatment step and preferably at a temperature above the flow point of the sealing layer, but below the flow point of the one or more insulation layers.

Fig. 1

Fig. 2

Fig. 3

Fig. 4

## Fig. 5

## Fig. 6a

## Fig. 6b

Fig. 7

Fig. 8

Fig. 9

Fig. 10a

| A1 | B1 | C1 | Manual load to test board or to module |
| Heater wire weld | Sensor wire weld | Pin weld | |

Fig 10(b)

| A1+B1 | C1 | Manual load to test board or to module |
| Sensor & Heater wire bonding | Pin weld | |

Fig. 11

# EUROPEAN SEARCH REPORT

Europäisches
Patentamt
European
Patent Office
Office européen
des brevets

**Application Number**

**EP 24 19 8257**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 389 225 A (AAGARD ROGER L [US] ET AL) 14 February 1995 (1995-02-14) * Fig. 7 and corresponding text passages * ----- | 1-15 | INV. G01N27/409 |
| A | US 2005/214170 A1 (KADING STEFAN [DE]) 29 September 2005 (2005-09-29) * Fig. 1 and corresponding text passages * ----- | 1-15 | |

**TECHNICAL FIELDS SEARCHED (IPC)**

G01N

The present search report has been drawn up for all claims

| Place of search | Date of completion of the search | Examiner |
|---|---|---|
| Munich | 10 January 2025 | Klein, Marc-Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 8257

This annex lists the patent family members relating to the patent documents cited in  the above-mentioned European search report.
The members are as contained in the European Patent Office EDP file on
The European Patent Office is in no way liable for these particulars which are merely given for the purpose of information.

10-01-2025

| Patent document cited in search report | | Publication date | Patent family member(s) | Publication date |
|---|---|---|---|---|
| US 5389225 | A | 14-02-1995 | NONE | |
| US 2005214170 | A1 | 29-09-2005 | NONE | |

EPO FORM P0459

For more details about this annex : see Official Journal of the European Patent Office, No. 12/82

**EP 4 703 718 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5827415 A
- WO 2013160271 A1
- JP 2004117099 A

**Non-patent literature cited in the description**

- **YOLE INTELLIGENCE**. *Gas and Particle Sensors - Technology and Market Trends*, 2021
- **ZHUIYKOV**. Electrochemistry of zirconia gas sensors. CRC Press, 2007
- **SHUK**. *Oxygen Gas Sensing Technologies Application: A Comprehensive Review*, 2017
- **HU et al.** Improved Internal Reference Oxygen Sensors with Composite Ceramic Electrodes. *J. Electrochem. Soc.*, 2012, vol. 159 (10), B811-B817
- **KANEKOA et al.** Performance of a miniature zirconia oxygen sensor with a Pd-PdO internal reference. *Sensors and Actuators B: Chemical*, 2005, vol. 108 (1-2), 331-334
- **DUNST et al.** Potentiometric oxygen sensor with solid state reference electrode. *Metrol. Meas. Syst.*, 2014, vol. XXI (2), 205-216
- **RADHAKRISHNAN et al.** Design, fabrication and characterization of a miniaturized series-connected potentiometric oxygen sensor. *Sensors and Actuators B*, 2005, vol. 105, 312-321

28